# FASCICULE DE BREVET EUROPEEN

(11) **EP 3 360 736 B1**
(45) Date de publication et mention de la délivrance du brevet: **26.02.2020**
(21) Numéro de dépôt: 18152131.1
(22) Date de dépôt: 17.01.2018
(51) Int. Cl.: B60T 7/04, G05G 1/50

(54) **PÉDALE DE FREIN POUR VÉHICULE AUTOMOBILE COMPORTANT UN INSERT MÉTALLIQUE**
BREMSPEDAL FÜR KRAFTFAHRZEUG, DAS EINEN METALLEINSATZ UMFASST
BRAKE PEDAL FOR MOTOR VEHICLE COMPRISING A METAL INSERT

(30) Priorité: 10.02.2017 FR 1751111
(43) Date de publication de la demande: 15.08.2018
(73) Titulaire: PSA Automobiles SA, 78300 Poissy (FR); Carbody, 51420 Witry les Reims (FR)
(72) Inventeur: CHAUVIN, Pascal, 91170 Viry Chatillon (FR); BENOIT, Romain, 78220 Viroflay (FR); KHARMA, Eric, 95610 Eragny sur Oise (FR); GAERTNER MERCIER, Catherine, 68290 Masevaux (FR); LEFEBVRE, Loïc, 51450 Bethény (FR)

(56) Documents cités:
- EP-A1- 1 331 150
- DE-A1-102014 209 276
- FR-A1- 2 924 973

## Description

La présente invention concerne une pédale de frein pour un véhicule automobile, ainsi que des procédés de dimensionnement de cette pédale de frein, et un véhicule automobile équipé d'une telle pédale de frein.

Les véhicules automobiles comportent généralement une pédale de frein formant un levier présentant un patin d'appui à sa base et un pivot transversal à son extrémité supérieure, permettant d'appliquer un effort démultiplié sur une tige de commande fixée sur ce levier entre le patin et le pivot, transmettant cet effort à un maître-cylindre de frein disposé vers l'avant.

Le maître-cylindre reçoit généralement un effort complémentaire venant d'un dispositif d'assistance, pour transmettre par un circuit hydraulique une pression de freinage aux freins disposés sur chaque roue.

Un type de pédale de frein connu, présenté notamment par le document EP-B1-1331150, comporte un insert central sensiblement plat réalisé dans une tôle métallique découpée, disposée dans un plan vertical perpendiculaire à l'axe du pivot.

La tôle métallique de l'insert central comporte des découpes comprenant des perçages circulaires pour le pivot transversal et la fixation de la tige de commande, ainsi que des grandes ouvertures entre ces perçages pour réduire la quantité de matière.

L'insert central reçoit par surmoulage une forme en matériau thermoplastique renforcé, pouvant comporter une charge minérale ou des fibres, pour réaliser un corps comportant le patin d'appui et des nervures disposées de chaque côté de la tôle métallique.

La tôle métallique de l'insert permet de renforcer le corps en matériau thermoplastique moulé. Toutefois en cas d'effort très important sur la pédale appliqué par le conducteur, notamment pour effectuer un freinage d'urgence, si on atteint l'effort de rupture du surmoulage en matériau thermoplastique, on obtient alors avec la tôle métallique seule une pédale de frein défaillante qui risque de ne plus permettre d'appliquer un freinage, même en mode dégradé.

La présente invention a notamment pour but d'éviter ces problèmes de l'art antérieur.

Elle propose à cet effet une pédale de frein pour un véhicule automobile, présentant à sa base un patin d'appui et en partie supérieure un pivot transversal, cette pédale comprenant un insert métallique formé dans une tôle découpée, disposée principalement dans un plan perpendiculaire à l'axe du pivot, et un corps réalisé par un surmoulage en matériau thermoplastique entourant l'insert métallique, caractérisée en ce que la tôle de l'insert métallique est réalisée dans un acier présentant une limite élastique supérieure à 500MPa.

Un avantage de cette pédale de frein est que l'acier présentant une limite élastique supérieure à 500MPa constitue un matériau à haute limite élastique, désigné par l'acronyme « HLE », qui donne à l'insert métallique en cas d'effort très élevé sur la pédale entraînant une rupture du moulage thermoplastique, notamment lors d'un freinage d'urgence, une résistance permettant d'assurer avec cet insert seul un fonctionnement dégradé donnant un niveau minimum de freinage du véhicule.

On peut de cette manière assurer la sécurité de fonctionnement avec une pédale de frein comportant une masse réduite, grâce au corps en matériau thermoplastique renforcé présentant une faible densité, entourant un insert métallique formé avec une tôle relativement mince.

La pédale de frein selon l'invention peut de plus comporter une ou plusieurs des caractéristiques suivantes, qui peuvent être combinées entre elles.

Avantageusement, la limite élastique de la tôle de l'insert métallique est supérieure à 700MPa.

Avantageusement, le matériau thermoplastique comporte des fibres de renfort.

Dans ce cas, le matériau thermoplastique comporte avantageusement plus de 50% de fibres de renfort.

Avantageusement, le matériau thermoplastique comporte une matrice comprenant un polyamide.

Avantageusement, la tôle de l'insert métallique comporte à son extrémité inférieure une partie pliée couvrant une majeure partie du patin d'appui.

Avantageusement, la tôle de l'insert métallique présente une épaisseur inférieure à 2mm.

L'invention a aussi pour objet un procédé de dimensionnement d'une pédale de frein comprenant l'une quelconque des caractéristiques précédentes, comportant une étape de dimensionnement de cette pédale avec une absence de détérioration du surmoulage en matériau thermoplastique, en appliquant sur le patin d'appui un effort au moins égal à 220daN.

L'invention a aussi pour objet un autre procédé de dimensionnement d'une pédale de frein comprenant l'une quelconque des caractéristiques précédentes, comportant une étape de dimensionnement de l'insert métallique seul sans le surmoulage en matériau thermoplastique, avec une déformation de cet insert restant dans la limite élastique de l'acier en appliquant sur son extrémité inférieure recevant le patin d'appui un effort au moins égal à 100daN.

L'invention a de plus pour objet un véhicule automobile équipé d'une pédale de frein comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 présente une pédale de frein suivant l'invention ;
- les figures 2 et 3 présentent respectivement la face arrière et la face avant de cette pédale de frein ; et
- les figures 4 et 5 présentent respectivement en vue de face et en vue de côté, l'insert métallique de cette pédale de frein.

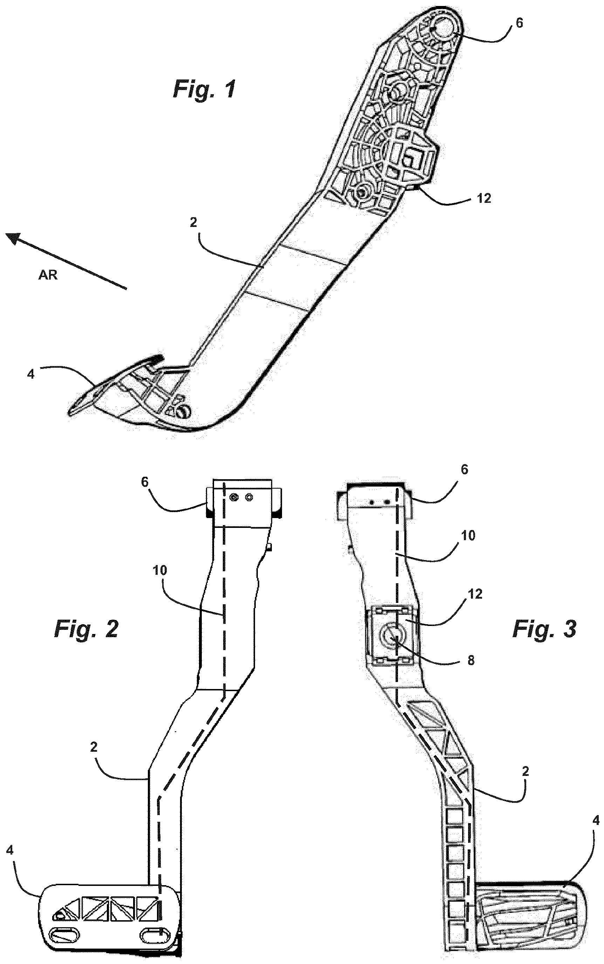

Les figures 1, 2 et 3 présentent une pédale de frein comportant un levier 2 présentant à son extrémité inférieure un patin d'appui 4 tourné vers le côté arrière indiqué par la flèche AR, correspondant au côté arrière du véhicule. Les côtés gauche et droit de la pédale de frein sont définis en regardant la face arrière de cette pédale.

L'extrémité supérieure du levier 2 comporte une forme cylindrique transversale présentant un perçage axial, recevant une tige pour constituer un pivot supérieur 6.

Le levier 2 comporte sur un environ un tiers de sa hauteur une partie supérieure d'épaisseur sensiblement constante, perpendiculaire à l'axe du pivot 6. La base de la partie supérieure comporte une cage 12 présentant un creux 8 tourné vers l'avant, prévu pour recevoir une tête sphérique d'une tige de commande actionnant un maître-cylindre de freinage disposé vers l'avant.

Le levier 2 comporte ensuite sur environ un deuxième tiers limité par un coude puis un contrecoude avec des angles d'environ 30°, une partie intermédiaire présentant une épaisseur se réduisant, formant une déviation vers la gauche.

Le levier 2 présente enfin une partie inférieure droite d'épaisseur constante, disposée dans un plan perpendiculaire à l'axe du pivot 6.

La base du levier 2 comporte le patin de frein 4, formant un pli qui est entièrement tourné vers le côté gauche de ce levier.

L'ensemble de la pédale de frein est réalisé par le surmoulage d'un matériau thermoplastique sur un insert métallique central 10 formé par une tôle métallique découpée et pliée, disposée sensiblement dans le plan vertical perpendiculaire à l'axe du pivot 6, en suivant le coude et le contrecoude de la partie centrale du levier 2.

En particulier la tôle de l'insert métallique 10 est recouverte entièrement sur toutes ses faces lors du surmoulage, de manière à ne pas rester apparente. Le matériau thermoplastique comporte de nombreux évidements laissant entre eux des nervures, permettant de limiter la quantité du matériau, et d'améliorer sa tenue mécanique par une plus grande homogénéité de ce matériau.

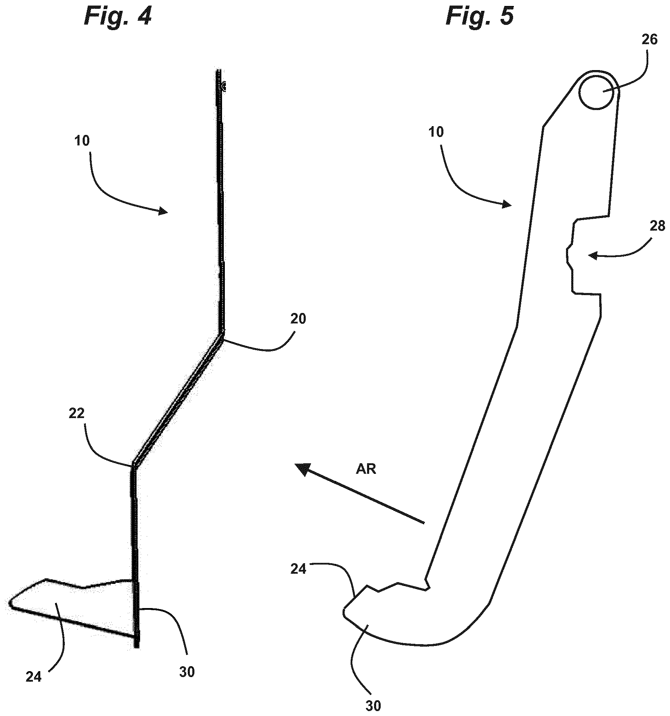

Les figures 4 et 5 présentent l'insert métallique 10 formé dans une tôle métallique plate, comportant dans sa partie intermédiaire le coude 20 et le contrecoude 22, puis à sa base un rebord tourné vers l'arrière 30, se terminant par un pli à 90° pour former une palette 24 insérée dans le patin d'appui 4, couvrant une majeure partie de ce patin.

L'insert métallique 10 comporte à son extrémité supérieure un perçage 26 prévu pour laisser passer l'axe du pivot 6, et à la base de sa partie supérieure une découpe tournée vers l'avant 28, prévue pour contenir la cage 12 recevant l'extrémité arrière de la tige de commande.

La tôle de l'insert métallique 10 est réalisée avec un acier à haute limite élastique, présentant une limite élastique supérieure à 500MPa. Avantageusement la limite élastique est supérieure à 700MPa. L'épaisseur de la tôle est faible, inférieure à 2mm. Avantageusement son épaisseur est de 1,5mm.

Le matériau thermoplastique du surmoulage comporte une matrice polymère en plastique technique, renforcée par des fibres, notamment de verre ou de carbone.

Avantageusement la matrice polymère est du type polyamide, qui permet une forte capacité de renforcement en acceptant un taux de charge important avec une matrice organique très fluide. En particulier le polyamide haute fluidité comporte avantageusement au moins 50% de fibres de verre, notamment au moins 60%.

L'ensemble des deux matières, surmoulage en matériau thermoplastique renforçant l'insert métallique 10, constitue un assemblage présentant une rigidité élevée, qui a pour objet de passer les efforts maximum que peuvent recevoir le patin 4 de la pédale de frein. Pour les freinages d'urgence cet effort maximum est compris entre 150 et 220daN.

Avec les efforts maximum du freinage d'urgence, la tôle de l'insert métallique 10 subit une déformation restant dans sa limite élastique grâce à la haute limite élastique de son matériau. La déformation de l'insert 10 suit alors la déformation du matériau thermoplastique injecté sans gradient de déformation entre ces deux éléments, ce qui conserve la cohésion de la pédale de frein, qui peut être produite sans utiliser d'élément de compatibilité additionnel pour assurer la liaison entre le métal et le plastique.

De plus pour des efforts trop importants entraînant une rupture du matériau thermoplastique du surmoulage, la pédale de frein conserve son insert métallique 10 comportant en particulier la palette pliée 24 permettant toujours un appui du pied, pour réaliser un freinage minimum du véhicule.

Avantageusement l'insert métallique 10 est dimensionné pour recevoir un effort minimum de 100daN, permettant d'appliquer un freinage du véhicule suivant un mode dégradé, assurant la sécurité.

Des comparaisons ont montré que la pédale de frein suivant l'invention permet une réduction de la masse globale d'environ 40% par rapport à une pédale entièrement métallique, avec un coût légèrement supérieur, et une réduction d'environ 15%, avec un coût inférieur, par rapport à une pédale comportant un matériau thermoplastique surmoulé sur un insert métallique, réalisée selon l'art antérieur.

De plus la pédale de frein suivant l'invention est plus fiable d'un point de vue sûreté de fonctionnement. En particulier grâce à son insert métallique 10, elle ne nécessite pas de contrôle non destructif unitaire qui serait nécessaire pour une pédale de frein comportant uniquement un matériau thermoplastique.

## Revendications

1. Pédale de frein pour un véhicule automobile, présentant à sa base un patin d'appui (4) et en partie supérieure un pivot transversal (6), cette pédale comprenant un insert métallique (10) formé dans une tôle découpée, disposée principalement dans un plan perpendiculaire à l'axe du pivot (6), et un corps (2) réalisé par un surmoulage en matériau thermoplastique entourant l'insert métallique (10), **caractérisée en ce que** la tôle de l'insert métallique (10) est réalisée dans un acier présentant une limite élastique supérieure à 500MPa.

2. Pédale de frein selon la revendication 1, **caractérisée en ce que** la limite élastique de la tôle de l'insert métallique (10) est supérieure à 700MPa.

3. Pédale de frein selon la revendication 1 ou 2, **caractérisée en ce que** le matériau thermoplastique comporte des fibres de renfort.

4. Pédale de frein selon la revendication 3, **caractérisée en ce que** le matériau thermoplastique comporte plus de 50% de fibres de renfort.

5. Pédale de frein selon l'une quelconque des revendications précédentes, **caractérisée en ce que** le matériau thermoplastique comporte une matrice comprenant un polyamide.

6. Pédale de frein selon l'une quelconque des revendications précédentes, **caractérisée en ce que** la tôle de l'insert métallique (10) comporte à son extrémité inférieure une partie pliée (24) couvrant une majeure partie du patin d'appui (4).

7. Pédale de frein selon l'une quelconque des revendications précédentes, **caractérisée en ce que** la tôle de l'insert métallique (10) présente une épaisseur inférieure à 2mm.

8. Procédé de dimensionnement d'une pédale de frein selon l'une quelconque des revendications précédentes, **caractérisé en ce qu'**il comporte une étape de dimensionnement de cette pédale comprenant une absence de détérioration du surmoulage en matériau thermoplastique, en appliquant sur le patin d'appui (4) un effort au moins égal à 220daN.

9. Procédé de dimensionnement d'une pédale de frein selon l'une quelconque des revendications 1 à 7, **caractérisé en ce qu'**il comporte une étape de dimensionnement de l'insert métallique (10) seul sans le surmoulage en matériau thermoplastique, comprenant une déformation de cet insert restant dans la limite élastique de l'acier en appliquant sur son extrémité inférieure recevant le patin d'appui (4) un effort au moins égal à 100daN.

10. Véhicule automobile équipé d'une pédale de frein, **caractérisé en ce que** cette pédale est selon l'une quelconque des revendications 1 à 7.

## Patentansprüche

1. Bremspedal für ein Kraftfahrzeug, das an seiner Basis eine Auflagebacke (4) und im oberen Teil einen Querzapfen (6) aufweist, wobei dieses Pedal einen metallischen Einsatz (10) umfasst, der in einem ausgeschnittenen Blech gebildet ist, das in der Hauptsache in einer Ebene senkrecht zu der Achse des Zapfens (6) angeordnet ist, und einen Körper (2), der durch ein Umspritzen aus Thermoplastmaterial hergestellt ist, das den metallischen Einsatz (10) umgibt, **dadurch gekennzeichnet, dass** das Blech des metallischen Einsatzes (10) aus einem Stahl hergestellt ist, der eine Streckgrenze größer als 500 MPa aufweist.

2. Bremspedal nach Anspruch 1, **dadurch gekennzeichnet, dass** die Streckgrenze des Blechs des metallischen Einsatzes (10) größer ist als 700 MPa.

3. Bremspedal nach Anspruch 1 oder 2, **dadurch gekennzeichnet, dass** das Thermoplastmaterial Verstärkungsfasern umfasst.

4. Bremspedal nach Anspruch 3, **dadurch gekennzeichnet, dass** das Thermoplastmaterial mehr als 50% Verstärkungsfasern umfasst.

5. Bremspedal nach einem der vorstehenden Ansprüche, **dadurch gekennzeichnet, dass** das Thermoplastmaterial eine Matrix umfasst, die ein Polyamid umfasst.

6. Bremspedal nach einem der vorstehenden Ansprüche, **dadurch gekennzeichnet, dass** das Blech des metallischen Einsatzes (10) an seinem unteren Ende einen gefalteten Teil (24) umfasst, der einen Hauptteil der Auflagebacke (4) abdeckt.

7. Bremspedal nach einem der vorstehenden Ansprüche, **dadurch gekennzeichnet, dass** das Blech des metallischen Einsatzes (10) eine Stärke kleiner als 2 mm aufweist.

8. Bemessungsverfahren eines Bremspedals nach einem der vorstehenden Ansprüche, **dadurch gekennzeichnet, dass** es einen Schritt des Bemessens dieses Pedals umfasst, der eine Abwesenheit von Beschädigung der Überspritzung aus Thermoplastmaterial umfasst, indem auf der Auflagebacke (4) eine Kraft mindestens gleich 220 daN angelegt wird.

9. Bemessungsverfahren eines Bremspedals nach einem der Ansprüche 1 bis 7, **dadurch gekennzeichnet, dass** es einen Bemessungsschritt des metallischen Einsatzes (10) allein, ohne die Umspritzung aus Thermoplastmaterial, umfasst, der ein Verformen dieses Einsatzes umfasst, das in der Streckgrenze des Stahls bleibt, indem auf seinem unteren Ende, das die Auflagebacke (4) aufnimmt, eine Kraft mindestens gleich 100 daN angelegt wird.

10. Kraftfahrzeug, das mit einem Bremspedal ausgestattet ist, **dadurch gekennzeichnet, dass** dieses Pedal gemäß einem der Ansprüche 1 bis 7 beschaffen ist.

## Claims

1. A brake pedal for a motor vehicle, having at its base a support pad (4) and at the upper part a transverse pivot (6), this pedal including a metal insert (10) formed in a cut sheet, disposed principally in a plane perpendicular to the axis of the pivot (6), and a body (2) realized by an overmoulding made of thermoplastic material surrounding the metal insert (10), **characterized in that** the sheet of the metal insert (10) is realized in a steel having an elastic limit greater than 500MPa.

2. The brake pedal according to Claim 1, **characterized in that** the elastic limit of the sheet of the metal insert (10) is greater than 700MPa.

3. The brake pedal according to Claim 1 or 2, **characterized in that** the thermoplastic material comprises reinforcement fibres.

4. The brake pedal according to Claim 3, **characterized in that** the thermoplastic material comprises more than 50 % of reinforcement fibres.

5. The brake pedal according to any one of the preceding claims, **characterized in that** the thermoplastic material comprises a matrix including a polyamide.

6. The brake pedal according to any one of the preceding claims, **characterized in that** the sheet of the metal insert (10) comprises at its lower end a bent part (24) covering a major portion of the support pad (4).

7. The brake pedal according to any one of the preceding claims, **characterized in that** the sheet of the metal insert (10) has a thickness less than 2mm.

8. A method for dimensioning of a brake pedal according to any one of the preceding claims, **characterized in that** it comprises a step of dimensioning of this pedal including an absence of deterioration of the overmoulding made of thermoplastic material, by applying on the support pad (4) a force at least equal to 220daN.

9. A method for dimensioning of a brake pedal according to any one of Claims 1 to 7, **characterized in that** it comprises a step of dimensioning of the metal insert (10) alone without the overmoulding made of thermoplastic material, including a deformation of this insert remaining in the elastic limit of steel by applying on its lower end receiving the support pad (4) a force at least equal to 100daN.

10. A motor vehicle equipped with a brake pedal, **characterized in that** this pedal is according to any one of Claims 1 to 7.
